# EUROPÄISCHE PATENTSCHRIFT

(11) **EP 2 461 992 B1**
(45) Veröffentlichungstag und Bekanntmachung des Hinweises auf die Patenterteilung: **01.01.2014**
(21) Anmeldenummer: 10732697.7
(22) Anmeldetag: 12.07.2010
(51) Int. Cl.: B60H 1/00

(54) **TEMPERIERUNGSEINRICHTUNG FÜR EIN KRAFTFAHRZEUG**
TEMPERATURE CONTROL DEVICE FOR A MOTOR VEHICLE
DISPOSITIF DE THERMORÉGULATION POUR VÉHICULE À MOTEUR

(30) Priorität: 07.08.2009 DE 102009028332
(43) Veröffentlichungstag der Anmeldung: 13.06.2012
(73) Patentinhaber: Robert Bosch GmbH, 70442 Stuttgart (DE)
(72) Erfinder: NORDEN, Roland, 71706 Markgroeningen (DE); KRAUTER, Gisbert, 71737 Kirchberg (DE); FASSNACHT, Jochen, 75365 Calw (DE); TSCHISMAR, Oliver, 71093 Weil Im Schoenbuch (DE); ECKERT, Bernd, 71665 Vaihingen An Der Enz (DE); RIES-MUELLER, Klaus, 74906 Bad Rappenau (DE)
(86) Internationale Anmeldenummer: PCT/EP2010/059980
(87) Internationale Veröffentlichungsnummer: WO 2011/015426

(56) Entgegenhaltungen:
- EP-A2- 0 566 854
- WO-A1-2011/015734
- DE-A1- 19 609 048
- US-A- 5 289 698

## Beschreibung

Die vorliegende Erfindung betrifft eine Temperierungseinrichtung für wenigstens eine Thermokomponente eines Kraftfahrzeugs gemäß dem Oberbegriff des Anspruches 1 und ein Verfahren zum Temperieren wenigstens einer Thermokomponente des Kraftfahrzeuges gemäß dem Oberbegriff des Anspruches 7.

### Stand der Technik

Der Kraftstoffverbrauch von Kraftfahrzeugen soll weiter gesenkt werden, um steigenden Preisen für fossile Kraftstoffe sowie aus Gründen des Umweltschutzes, insbesondere wegen des Treibhauseffektes, Rechnung zu tragen. Zur Senkung des Energieverbrauches werden Hybridfahrzeuge und Elektrofahrzeuge eingesetzt. Diese Hybridfahrzeuge und Elektrofahrzeuge verfügen über Batterien als elektrochemische Energiespeicher für elektrischen Strom. Um einen sicheren, zuverlässigen und dauerhaften Betrieb der elektrochemischen Energiespeicher bzw. der Batterien, z.B. Lithiumionenbatterien, zu gewährleisten, muss die Temperatur der Batterien in einem bestimmten Temperaturbereich, z.B. einem Bereich zwischen 0 und 40°C, gehalten werden. Hierzu sind Systeme zur Temperierung, d.h. zum Kühlen oder Erwärmen, der Batterien bekannt, die mittels gezielter Luftführung um die Batterien oder einem Temperiersystem auf Wasser/Glykol-Basis funktionieren. Der für die Temperierung der Batterien notwendige Energieverbrauch soll dabei möglichst gering gehalten werden. Ferner ist auch eine Temperierung anderer Komponenten des Kraftfahrzeuges, z.B. des Fahrzeuginnenraumes, erforderlich. Ein Kraftfahrzeug umfasst somit unterschiedliche Thermokomponenten, z.B. die Batterie, den Fahrzeuginnenraum oder einen Elektromotor als Antriebsmotor und/oder einen Verbrennungsmotor und/oder eine Leistungselektronik zum Antrieb des Kraftfahrzeuges, die zu temperieren sind. Dabei soll der zur Temperierung der Thermokomponenten des Kraftfahrzeuges erforderliche Energieverbrauch insgesamt möglichst gering gehalten werden.

Die DE 196 09 048 C2 zeigt eine Heiz- und Klimatisierungseinrichtung für ein Kraftfahrzeug, insbesondere ein Elektro- oder Hybridfahrzeug. Die Einrichtung umfasst einen Wärmetauscher, eine Pumpe, eine Wärmequelle als Heizeinrichtung, z.B. eine Brennstoffheizung oder eine elektrische Heizung, zur Erwärmung der Flüssigkeit und Ventilmittel. Der Wärmetauscher ist sekundärseitig luftbeaufschlagt und es ist ein Gebläse zur Erzeugung eines Luftstromes vorgesehen. Ein Kältekreis mit einem Verdampfer, einem Kondensator und einem Kompressor ist über ein Ventilmittel mit einem ersten Flüssigkeitskreis thermisch koppelbar. Dabei ist der Verdampfer mit einem Thermospeicher mit einem zweiten Flüssigkeitskreislauf thermisch gekoppelt und mittels der Ventilmittel kann der erste Flüssigkeitskreis unmittelbar mit dem zweiten Flüssigkeitskreis hydraulisch gekoppelt werden. Mittels des Verdampfers kann damit der Thermospeicher mit Kälteenergie aufgeladen werden und mittels eines Wärmetauschers in dem ersten Flüssigkeitskreis und dem Gebläse kann der Fahrzeuginnenraum gekühlt werden.

Die US 5 289 698 zeigt eine Einrichtung gemäß Oberbegriff des Anspruchs 1 bzw. ein Verfahren gemäß Oberbegriff des Anspruchs 7.

### Offenbarung der Erfindung

### Vorteile der Erfindung

Erfindungsgemäße Temperierungseinrichtung für wenigstens eine Thermokomponente eines Kraftfahrzeug, insbesondere ein Elektro- oder Hybridfahrzeug, umfassend einen V-Fluidkreislauf, einen Kältekreis mit einem Verdampfer, einem Kondensator und einem Verdichter, wobei der V-Fluidkreislauf mit dem Verdampfer thermisch gekoppelt ist zum Kühlen der wenigstens einer Thermokomponente des Kraftfahrzeuges mittels des V-Fluidkreislaufes, wobei die Temperierungseinrichtung einen K-Fluidkreislauf umfasst und der K-Fluidkreislauf mit dem Kondensator thermisch gekoppelt ist zum Erwärmen wenigstens einer Thermokomponente des Kraftfahrzeuges mittels des K-Fluidkreislaufes.

In vorteilhafter Weise ist damit auch der Kondensator des Kältekreises mit dem K-Fluidkreislauf thermisch gekoppelt, so dass wenigstens eine Thermokomponente des Kraftfahrzeuges mittels des K-Fluidkreislaufes und dem Kondensator erwärmt werden kann. Der Kältekreis kann damit in vorteilhafter Weise als Wärmepumpe zum Erwärmen wenigstens einer Thermokomponente des Kraftfahrzeuges genutzt werden, indem wenigstens einer Thermokomponente des Kraftfahrzeuges Wärme entzogen wird, d.h. diese gekühlt wird. Dabei kann als Thermokomponente des Kraftfahrzeuges auch die Umgebungsluft des Kraftfahrzeuges benutzt werden. Zur Nutzung der Umgebungsluft des Kraftfahrzeuges ist der K-Fluidkreislauf mit einem Wärmetauscher fluidmäßig gekoppelt und durch den Wärmetauscher wird vorzugsweise Umgebungsluft mittels eines Gebläses durchgeleitet. Dieser Wärmetauscher kann dabei auch ein Kühlmittelkühler für Kühlmittel zur Kühlung eines Verbrennungsmotors des Kraftfahrzeuges sein. Wärmepumpen weisen beispielsweise eine Leistungszahl von ungefähr 3 auf, so dass die dreifache Wärmeenergie am Kondensator abgegeben wird, welche für den Betrieb des Verdichters in Form von mechanischer Energie erforderlich ist. Ferner kann als Thermokomponente insbesondere auch eine Batterie des Kraftfahrzeuges temperiert werden, so dass die Batterie des Kältekreises erwärmt oder gekühlt wird, je nach Bedarf.

Erfindungsgemäß ist mittels einer Ventileinheit auswählbar die wenigstens eine Thermokomponente des Kraftfahrzeuges mit dem V-Fluidkreislauf thermisch koppelbar. Das Kraftfahrzeug weist verschiedene Thermokomponenten auf. Mittels der Ventileinheit wird dabei nur diejenige oder diejenigen Thermokomponenten mit dem V-Fluidkreislauf thermisch gekoppelt, welche zu kühlen sind. Thermokomponenten, die dabei nicht zu kühlen sind, werden dabei nicht mit dem V-Fluidkreislauf thermisch gekoppelt, indem zu der nicht zu kühlenden Thermokomponente von der Ventileinheit eine Leitung für den V-Fluidkreislauf geschlossen wird.

In einer weiteren Ausgestaltung ist die wenigstens eine Thermokomponente eine Batterie, eine Steuerungseinheit, wenigstens ein Elektromotor, ein Verbrennungsmotor, ein Fahrzeuginnenraum und/oder die Umgebungsluft des Kraftfahrzeuges. Die Steuerungseinheit kann auch eine Leistungselektronik umfassen. Das Fluid des V-Fluidkreislaufes oder das Fluid des K-Fluidkreislaufes wird dabei im Allgemeinen nicht unmittelbar zu der Thermokomponente geleitet, sondern an der Thermokomponente des Kraftfahrzeuges ist ein Wärmetauscher vorhanden, der von dem Fluid des V-Fluidkreislaufes oder des K-Fluidkreislaufes durchströmt wird. Von dem Wärmetauscher wird dabei die Wärme bzw. Kälte mittelbar an die entsprechende Thermokomponente des Kraftfahrzeuges abgegeben. Die thermische Kopplung erfolgt somit mittelbar durch den Wärmetauscher. Somit handelt es sich beispielsweise bei der zu koppelnden Thermokomponente als Batterie um den Wärmetauscher, der der Batterie zugeordnet ist. Durch diesen der Batterie zugeordneten Wärmetauscher wird beispielsweise Luft durchgeleitet, mittels der die Batterie temperiert wird.

In einer ergänzenden Ausführungsform ist mittels der Ventileinheit auswählbar die wenigstens eine Thermokomponente des Kraftfahrzeuges mit dem K-Fluidkreislauf thermisch koppelbar. In analoger Weise zu dem V-Fluidkreislauf kann somit mittels der Ventileinheit, die beispielsweise auch aus zwei Einheiten bestehen kann, wenigstens eine Thermokomponente ausgewählt und thermisch mit dem K-Fluidkreislauf gekoppelt. Dabei strömt das Fluid des K-Fluidkreislaufes zu den entsprechenden zu erwärmenden Thermokomponenten bzw. den Wärmetauschern der diesen zugeordneten Thermokomponenten, indem entsprechende Ventile der Ventileinheit die entsprechenden Leitungen freigeben. Die nicht zu erwärmenden Thermokomponenten bzw. Wärmetauscher, die diesen Thermokomponenten zugeordnet sind, werden dabei nicht von dem Fluid des K-Fluidkreislaufes durchströmt, indem entsprechende Ventile der Ventileinheit geschlossen sind.

In einer weiteren Ausgestaltung umfasst die Temperierungseinrichtung eine Steuerungseinheit und wenigstens einen Sensor zur Erfassung der Ist-Temperatur der wenigstens einen Thermokomponente. Von der Steuerungseinheit werden die von den Sensoren erfassten Ist-Temperaturen mit der erforderlichen Soll-Temperatur verglichen und bei einem entsprechenden Temperierungsbedarf die wenigstens eine Thermokomponente gekühlt oder erwärmt. Dabei erfolgt die Steuerung des Erwärmens oder Kühlens der wenigstens einen Thermokomponente energieoptimiert, d.h. mit einem möglichst geringen Energieaufwand. Dieses energieoptimierte Temperieren der Thermokomponenten ist insbesondere deshalb möglich, weil aus der Gesamtzahl der Thermokomponenten des Kraftfahrzeuges jede beliebige Thermokomponente ausgewählt und gekühlt oder erwärmt werden kann. Es handelt sich hierbei somit bei der Temperierungseinrichtung um ein sehr flexibles System, das je nach Bedarf unter Berücksichtigung eines minimalen Energieaufwandes zur Temperierung diejenigen Thermokomponenten auswählt, die gerade zu kühlen sind und diejenigen, die gerade zu erwärmen sind.

Vorzugsweise ist der K-Fluidkreislauf mittels eines K-Wärmetauschers mit dem Kondensator thermisch gekoppelt und/oder der V-Fluidkreislauf ist mittels eines V-Wärmetauschers mit dem Verdampfer thermisch gekoppelt und/oder der K-Fluidkreislauf ist ein Flüssigkeitskreislauf mit einer K-Umwälzpumpe und/oder der V-Fluidkreislauf ist ein Flüssigkeitskreislauf mit einer V-Umwälzpumpe

In einer Variante ist der K-Fluidkreislauf unmittelbar mit dem V-Fluidkreislauf ohne Zwischenschaltung des Kältekreises thermisch koppelbar, so dass mittels der Wärme wenigstens eine zu kühlende Thermokomponente wenigstens eine zu erwärmende Thermokomponente erwärmbar ist. Bei einer Verwendung von Flüssigkeit in dem K- und V-Fluidkreislauf ist mittels entsprechender Ventile, insbesondere 3-Wegeventile, eine unmittelbare hydraulische Kopplung zwischen dem K- und dem V-Fluidkreislauf ausführbar. Somit kann ohne Zwischenschaltung des Kältekreises von einer zu kühlenden Thermokomponente, z.B. der Verbrennungsmotor oder der Elektromotor, Wärme auf eine zu erwärmende Thermokomponente, z.B. die Batterie oder den Fahrzeuginnenraum, übertragen werden. Damit kann der Energieverbrauch der Temperierungseinrichtung noch weiter abgesenkt werden, weil, sofern es die Temperaturniveaus der verschiedenen Thermokomponenten zulassen, eine Temperierung der Thermokomponenten möglich ist, ohne mechanische Energie zum Betreiben des Verdichters aufwenden zu müssen.

Zweckmäßig umfasst die Temperierungseinrichtung einen Thermospeicher zum Speichern von Wärme- oder Kälteenergie.

In einer weiteren Ausführungsform ist der Thermospeicher mit dem K- oder V-Fluidkreislauf thermisch koppelbar, insbesondere als Thermokomponente. In dem Thermospeicher kann Wärme- oder Kälteenergie gespeichert werden. Wurde das Kraftfahrzeug beispielsweise als Hybridkraftfahrzeug über einige Zeit mit dem Verbrennungsmotor betrieben, so kann mittels der Abwärme des Verbrennungsmotors der Thermospeicher auf eine hohe Temperatur erwärmt werden. Nach einem Stillstand des Hybridkraftfahrzeuges ist zum Betreiben der Batterien bei geringen Außentemperaturen, z.B. von 0°, ein Erwärmen der Batterien um 10°, z.B. auf 10° erforderlich. Dieses Erwärmen der Batterien des Hybridkraftfahrzeuges kann mittels der in dem Thermospeicher gespeicherten Wärmeenergie durchgeführt werden.

In einer weiteren Ausgestaltung ist in dem V-Fluidkreislauf und/oder in dem K-Fluidkreislauf eine Mischeinrichtung vorhanden zur Mischung des Vor- und Rücklaufes des V- oder K-Fluidkreislaufes. Ist beispielsweise in dem Thermospeicher Wärmeenergie auf einem sehr hohen Temperaturniveau, z.B. von 80° gespeichert, kann mittels der Mischeinrichtung dieses hohe Temperaturniveau des Thermospeichers auf ein niedrigeres Temperaturniveau beispielsweise zum Erwärmen der Batterie, z.B. auf 20°, abgesenkt werden.

Erfindungsgemäßes Verfahren zum Temperieren wenigstens einer Thermokomponente eines Kraftfahrzeuges, insbesondere eines Elektro- oder Hybridfahrzeuges, mit den Schritten: Kühlen wenigstens einer zu kühlenden Thermokomponente, Erwärmen wenigstens einer zu erwärmenden Thermokomponente, indem Wärme von der wenigstens einen zu kühlenden Thermokomponente auf die wenigstens eine zu erwärmende Thermokomponente übertragen wird, wobei aus verschiedenen Thermokomponenten wenigstens eine zu kühlende Thermokomponente ausgewählt und gekühlt wird und/oder aus verschiedenen Thermokomponenten wenigstens eine zu erwärmende Thermokomponente ausgewählt und erwärmt wird.

In vorteilhafter Weise kann damit aus den verschiedenen Thermokomponenten beliebig wenigstens eine zu kühlende und/oder zu erwärmende Thermokomponente ausgewählt und gekühlt und/oder erwärmt werden. Es handelt sich somit nicht um ein starres und unflexibles Verfahren zum Kühlen wenigstens einer vorgegebenen zu kühlenden Thermokomponente und wenigstens einer vorgegebenen zu erwärmenden Thermokomponente, sondern aus der Vielzahl der Thermokomponenten des Kraftfahrzeuges kann wenigstens eine Thermokomponente ausgewählt werden, die zu kühlen ist und wenigstens eine Thermokomponente beliebig ausgewählt werden, die zu erwärmen ist. Zeitlich aufeinanderfolgend können dabei auch die Thermokomponenten zwischen einer zu kühlenden und einer zu erwärmenden Thermokomponente gewechselt werden. Beispielsweise ist anfangs eine Batterie bei einem Stillstand des Kraftfahrzeuges bei einer Außentemperatur von 0° auf einen Temperaturwert von 20° zu erwärmen. Während der Fahrt des Kraftfahrzeuges gibt die Batterie Abwärme ab, so dass anschließend die Batterie zu kühlen ist und somit eine zu kühlende Thermokomponente des Kraftfahrzeuges darstellt. Damit wird ein flexibles Verfahren zur Verfügung gestellt, das die vorhandenen Thermokomponenten beliebig auswählen kann. Damit kann der Energieverbrauch zum Temperieren der Thermokomponenten des Kraftfahrzeuges abgesenkt werden, weil bei der Auswahl der zu kühlenden und/oder zu erwärmenden Thermokomponenten auf beliebige Thermokomponenten zugegriffen werden kann und zur Minimierung des Energieverbrauches zum Temperieren der Thermokomponenten die entsprechenden Thermokomponenten ausgewählt werden können.

Erfindungsgemäß wird die wenigstens eine zu erwärmende Thermokomponente ausgewählt, indem die wenigstens eine Thermokomponente mittels einer Ventileinheit thermisch mit einem K-Fluidkreislauf gekoppelt wird.

Erfindungsgemäß wird die wenigstens eine zu kühlende Thermokomponente ausgewählt, indem die wenigstens eine Thermokomponente mittels der Ventileinheit thermisch mit einem V-Fluidkreislauf gekoppelt wird.

In eine ergänzenden Variante ist der K-Fluidkreislauf mit einem Kondensator eines Kältekreises thermisch gekoppelt und/oder der V-Fluidkreislauf thermisch mit einem Verdampfer des Kältekreises gekoppelt. Bei der Nutzung eines Kältekreises als Wärmepumpe kann die hohe Leistungszahl einer Wärmepumpe verwendet werden, weil damit mehr Wärme zur Verfügung gestellt werden kann als mechanische Energie zum Betreiben des Verdichters erforderlich ist.

In einer weiteren Variante wird die Wärme von der wenigstens einen zu kühlenden Thermokomponente auf die wenigstens eine zu erwärmende Thermokomponente ohne den Kältekreis durch einen Fluidkreislauf, insbesondere einen zusammengeschalteten V-und K-Fluidkreislauf, übertragen. Ist die Temperatur der wenigstens einen zu erwärmende Thermokomponente kleiner als die Temperatur der wenigstens einen zu kühlenden Thermokomponente, ist kein Kältekreis erforderlich und die Wärme kann mittels des Fluidkreislaufes unmittelbar durch Wärmekonvektion übertragen werden. Beträgt beispielsweise die Temperatur des Verbrennungsmotors als zu kühlende Thermokomponente 70°C und die Temperatur der zu erwärmenden Thermokomponente, z.B. eine Batterie, 0° so kann die Wärme von dem Verbrennungsmotor mittels Leiten von Fluid durch den Fluidkreislauf auf die Batterie übertragen werden.

In einer weiteren Ausgestaltung ist die wenigstens eine Thermokomponente eine Batterie, eine Steuerungseinheit, wenigstens ein Elektromotor, ein Verbrennungsmotor, ein Fahrzeuginnenraum, ein Thermospeicher und/oder die Umgebungsluft des Kraftfahrzeuges. Als Batterie kann auch eine Batteriemodul mit mehreren Batterien aufgefasst werden.

Insbesondere wird die Wärme von der wenigstens einen zu kühlenden Thermokomponente auf die wenigstens eine zu erwärmende Thermokomponente mittels Wärmekonvektion, insbesondere mittels wenigstens eines Fluidkreislaufes, übertragen.

In eine weiteren Ausgestaltung ist oder umfasst die Steuerungseinheit eine Leistungselektronik, welche Abwärme abgibt.

In einer Variante ist der Elektromotor ein Antriebsmotor zum Antrieb des Kraftfahrzeuges, z.B. ein Radnabenmotor, der Abwärme abgibt.

In einer weiteren Ausgestaltung wird von der Steuerungseinheit eine Störung mittels entsprechender Sensoren wenigstens einer Thermokomponente, z.B. der Batterie, erkannt und bei der Störung eine Überkühlung der wenigstens einen Thermokomponente, z.B. unter ein normales Temperaturniveau zum normalen Betrieb, z.B. im Fall einer Batterie auf eine Temperatur von 0° durchgeführt, um weiteren Schaden, z.B. ein thermal runaway von Batterien, zu vermeiden.

In einer weiteren Ausgestaltung besteht die Ventileinheit aus zwei Ventilblöcken, wobei in jedem Block mehrere Ventile in einem Gehäuse zusammengefasst sind.

In einer weiteren Ausgestaltung umfasst die Ventileinheit elektrische Ventile. Die elektrischen Ventile werden von der Steuerungseinheit durch Steuerungsleitungen elektrisch angesteuert und geöffnet oder geschlossen.

Zweckmäßig umfasst die Ventileinheit temperaturgesteuerte Thermostatventile, z.B. Dehnstoffthermostate. Thermostatventile können zwar nicht von einer zentralen Steuerungseinheit optimal angesteuert werden, jedoch sind diese kostengünstiger und weniger wartungsanfälliger, z.B. bei einem Ausfall der Steuerungseinheit funktionieren die Thermostatventile weiterhin.

In einer weiteren Ausgestaltung wird zur Minimierung des Energieverbrauches der Temperierungseinrichtung auch die Förderleistung der Umwälzpumpen an die thermischen Anforderungen angepasst und/oder die Leistung von Gebläsen an die thermischen Anforderungen angepasst. Die Leistung der Umwälzpumpe oder des Gebläses wird somit in Abhängigkeit von thermischem Bedarf gesteuert und/oder geregelt.

In einer weiteren Ausgestaltung umfasst die Temperierungseinrichtung einen Wärmetauscher, mittels dem der V-Fluidkreislauf oder der K-Fluidkreislauf thermisch mit der Umgebungsluft des Kraftfahrzeuges gekoppelt werden kann und vorzugsweise ist an dem Wärmetauscher für die Umgebungsluft ein in der Leistung veränderbares Gebläse angeordnet.

In einer weiteren Ausgestaltung umfasst die Temperierungseinrichtung einen Wärmetauscher am Verbrennungsmotor, wobei der Wärmetauscher thermisch mit dem Kühlmittel des Verbrennungsmotors und mit dem Fluid des V- oder K-Fluidkreislaufes thermisch gekoppelt ist.

Zweckmäßig ist der Verdichter ein Hermetik-Verdichter, ein Halbhermetik-Verdichter oder ein offener Verdichter.

In einer zusätzlichen Ausführungsform ist der Verdichter des Kältekreises von dem Verbrennungsmotor antreibbar und/oder von einem Elektromotor für den Verdichter antreibbar bzw. der Verdichter des Kältekreises wird von dem Verbrennungsmotor angetrieben und/oder wird von dem Elektromotor für den Verdichter angetrieben.

In einer weiteren Ausgestaltung ist der Thermospeicher ein Flüssigkeitsspeicher mit einer Isolierung und/oder Batterien, z. B. Lithium-Ionen-Batterien, des Elektro- oder Hybridfahrzeuges zum Antrieb des Kraftfahrzeuges. Die Batterien werden somit zusätzlich als Thermospeicher genutzt.

Vorzugsweise ist die wenigstens eine Thermokomponente ein Ladegerät zum Aufladen der Batterie. Das Ladegerät wird an ein externes Stromnetz während eines Stillstandes des Kraftfahrzeuges, insbesondere des Hybrid- oder Elektrofahrzeuges, angeschlossen. Das Ladegerät transformiert vorzugsweise die Spannung des externen Stromnetzes auf eine Ladespannung für die wenigstens eine Batterie, z.B. von 220 V auf 400 V. Ferner wird vorzugsweise von dem Ladegerät eine Wechselspannung des externen Stromnetzes in eine Gleichspannung gerichtet. Die Abwärme des Ladegerätes beim Aufladen der Batterie beträgt z. B. mehrere 100 W bis ungefähr 1 kW. Das Kraftfahrzeug ist im Allgemeinen mittels eines Stromkabels und einem Stecker mit dem externen Stromnetz während des Stillstandes des Kraftfahrzeuges verbunden. Das Verfahren kann damit auch beim Stillstand des Kraftfahrzeuges betrieben werden, vorzugsweise mittels elektrischer Energie aus dem externen Stromnetz, z. B. für den Verdichter.

Insbesondere ist das Hybridfahrzeug ein Plug-In-Hybridfahrzeug.

In einer ergänzenden Variante ist die wenigstens eine Thermokomponente ein Motor- und/oder Getriebeöl des Verbrennungsmotors.

In eine zusätzlichen Ausführungsform wird das Verfahren vor einem Fahrtantritt mit dem Kraftfahrzeug und/oder während eines Stillstandes und/oder während des Aufladens der wenigstens einen Batterie des Kraftfahrzeuges und/oder während der Fahrt des Kraftfahrzeuges ausgeführt. Die Abwärme aus dem Ladegerät und/oder der Batterie beim Aufladen der Batterie kann damit z. B. zum Erwärmen des Motor- und/oder Getriebeöls genutzt werden, so dass der Verbrennungsmotor in der Startphase vorgewärmt ist und damit weniger Kraftstoff verbraucht. Darüber hinaus kann auch aus der Abwärme des Ladegerätes und/oder der Batterie der Fahrzeuginnenraum während des Aufladens der Batterie der Fahrzeuginnenraum, z. B. im Winter bei niedrigen Außentemperaturen, erwärmt werden, so dass in der Anfangsphase der Fahrt mit dem Kraftfahrzeug aus der Batterie keine Energie zum Erwärmen des Fahrzeuginnenraumes benötigt wird und in vorteilhafter Weise somit die Reichweite des Kraftfahrzeuges, die mit elektrischer Energie aus der Batterie zurückgelegt werden kann, erhöht wird.

Vorzugsweise wird in dem Thermospeicher Wärme aus dem Ladegerät und/oder der Batterie gespeichert und zu einer späteren Zeit wenigstens eine Thermokomponente mit der Wärme aus dem Thermospeicher erwärmt.

In einer weiteren Ausgestaltung wird ein bevorstehender Fahrantritt mit dem Kraftfahrzeug ermittelt und vor dem Fahrtantritt wenigstens eine Thermokomponente des Kraftfahrzeuges mittels elektrischer Energie aus dem externen Stromnetz temperiert. Damit braucht keine elektrische Energie aus der Batterie zum Temperieren der wenigstens einen Thermokomponente genutzt werden, so dass die Reichweite des Kraftfahrzeuges, die mit elektrischer Energie aus der Batterie zurückgelegt wird, erhöht werden kann. Beispielsweise wird der Fahrzeuginnenraum vor Fahrtantritt mittels elektrischer Energie aus dem externen Stromnetz erwärmt und/oder das Motor- und/oder Getriebeöl mittels elektrischer Energie aus dem externen Stromnetz und/oder der Verbrennungsmotor mittels elektrischer Energie aus dem externen Stromnetz erwärmt. Ferner kann auch die Batterie mittels elektrischer Energie aus dem externen Stromnetz auf eine Betriebstemperatur bzw. Soll-Temperatur, z. B. im Bereich zwischen 0° C und 40°C, temperiert werden. Die Betriebstemperatur ist zum Auf- oder Entladen der Batterie erforderlich.

In einer zusätzlichen Ausführungsform wird ein bevorstehender Fahrtantritt ermittelt, indem der bevorstehende Fahrtantritt vom Benutzer des Kraftfahrzeuges eingegeben wird, z. B. mittels einer Fernsteuerung und/oder einem Timer und/oder einem mobilen tragbaren Gerät, z. B. ein Handy, Blackberry^{®} oder Laptop. Der Timer ist beispielsweis im Kraftfahrzeug angeordnet und mittels des Timers kann vom Benutzer eingegeben werden, wann der nächste Fahrtantritt erfolgt.

Vorzugsweise umfasst die Temperierungseinrichtung eine Fernsteuerung und/oder einen Timer und/oder ein mobiles tragbares Gerät, z. B. ein Handy, Blackberry oder Laptop.

Zweckmäßig wird ein bevorstehender Fahrtantritt mittels einer Koppelung mit Wetterinformationen und/oder mittels einer Koppelung mit dem Internet ermittelt.

In einer Variante wird ein bevorstehender Fahrtantritt mittels einer Koppelung mit einem Garagentüröffner ermittelt. Bei einem Öffnen einer Garagentür mit einem Garagentüröffner wird auf einen bevorstehenden Fahrtantritt geschlossen und wenigstens eine Thermokomponente mittels elektrischer Energie aus dem externen Stromnetz temperiert, z. B. ein Fahrzeuginnenraum vorklimatisiert, d. h. die Temperierungseinrichtung fungiert als Standheizung.

In einer Variante wird ein bevorstehender Fahrtantritt mittels einer Nutzungshistorie des Kraftfahrzeuges ermittelt. Wird beispielsweise das Kraftfahrzeug von Montag bis Freitag um 8.00 Uhr für eine Fahrt benutzt, kann in einem vorgegebenen Zeitraum vor dem Fahrtantritt, d. h. 8.00 Uhr, wenigstens eine Thermokomponente temperiert werden, z. B. der Fahrzeuginnenraum in Abhängigkeit von der Außentemperatur im Sommer gekühlt und im Winter erwärmt werden, beispielsweise auf eine Temperatur von 21° C. Ferner kann die die Batterie vor Fahrtantritt auf eine Betriebstemperatur temperiert werden.

Das Temperieren der wenigstens einen Thermokomponente des Kraftfahrzeuges ist das Erwärmen und/oder Kühlen der wenigstens einen Thermokomponente.

In einer weiteren Ausgestaltung wird eine Ist-Temperatur wenigstens einer Thermokomponente erfasst, die Ist-Temperatur der wenigstens einen Thermokomponente mit einer Soll-Temperatur der wenigstens einen Thermokomponente verglichen und bei einer Abweichung der Ist-Temperatur der wenigstens einen Thermokomponente von der Soll-Temperatur die wenigstens eine Thermokomponente temperiert.

In einer weiteren Ausgestaltung ist der Verdichter mit der Batterie, insbesondere Traktionsbatterie, elektrisch gekoppelt und wird von der Batterie mit elektrischer Energie versorgt.

Zweckmäßig arbeitet der Verdichter im Spannungsbereich der Batterie.

Ein erfindungsgemäßes Kraftfahrzeug umfasst eine in dieser Schutzrechtsanmeldung beschriebene Temperierungseinrichtung und/oder von dem Kraftfahrzeug ist ein in dieser Schutzrechtsanmeldung beschriebenes Verfahren ausführbar.

### Kurze Beschreibung der Zeichnungen

Im Nachfolgenden wird ein Ausführungsbeispiel der Erfindung unter Bezugnahme auf die beigefügten Zeichnungen näher beschrieben. Es zeigt:
- Fig. 1: einen schematisiertes Systembild einer Temperierungseinrichtung und
- Fig. 2: eine Ansicht eines Kraftfahrzeuges.

### Ausführungsformen der Erfindung

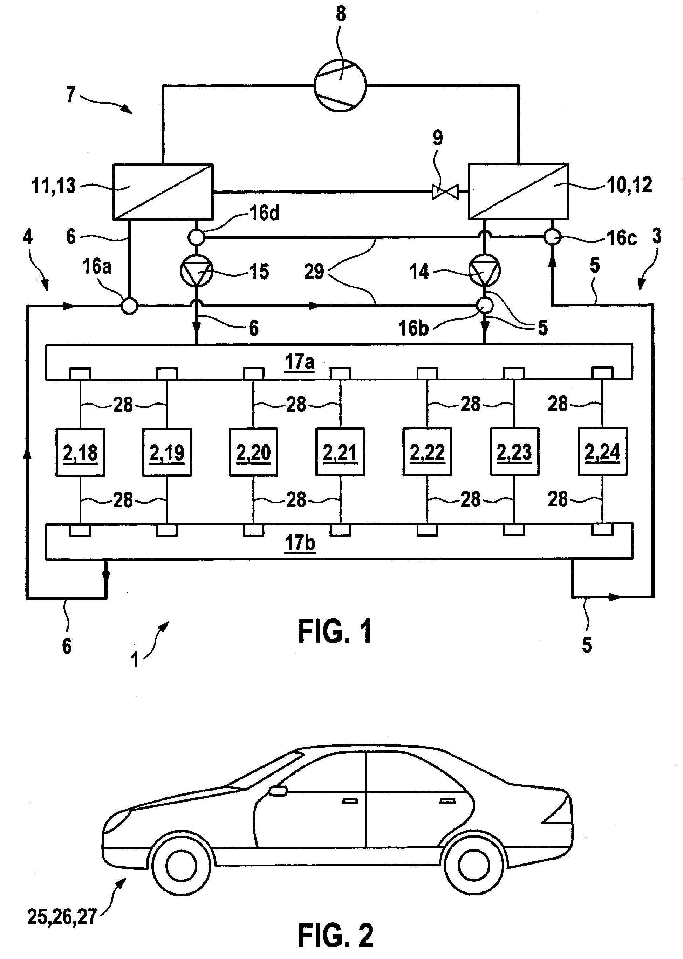

Fig. 1 ist ein Systembild einer Temperierungseinrichtung 1 zum Temperieren, d.h. zum Kühlen oder zum Erwärmen von Thermokomponenten 2 eines als Hybridfahrzeugs 26 oder Elektrofahrzeuges 27 ausgebildeten Kraftfahrzeuges 25.

Die Temperierungseinrichtung 1 umfasst einen Kältekreis 7 mit einem Verdichter 8, einem Expansionsventil 9, einem Verdampfer 10 und einem Kondensator 11. Durch einen V-Fluidkreislauf 3 mit Leitungen 5 wird Flüssigkeit als Fluid mittels einer V-Umwälzpumpe 14 gepumpt. Der V-Fluidkreislauf ist dabei thermisch mit dem Verdampfer 10 des Kältekreises 7 gekoppelt, indem der Verdampfer 10 als V-Wärmetauscher 12 ausgebildet ist. Durch den V-Wärmetauscher 12 strömt das Kältemittel des Kältekreises 7 und die Flüssigkeit des V-Fluidkreislaufes 3. Damit kann am V-Wärmetauscher 12 vom Fluid des V-Fluidkreislaufes 3 Wärme an das Kältemittel abgegeben werden, d.h. am V-Wärmetauscher 12 wird die Flüssigkeit des V-Fluidkreislaufes 3 gekühlt. In analoger Weise zu dem V-Fluidkreislauf 3 umfasst die Temperierungseinrichtung 1 einen K-Fluidkreislauf 4. Durch Leitungen 6 des K-Fluidkreislaufes wird Flüssigkeit als Fluid durch eine K-Umwälzpumpe 15 umgepumpt bzw. umgewälzt. Der K-Fluidkreislauf 4 ist dabei thermisch mit dem Kondensator 11 des Kältekreises 7 gekoppelt, indem der Kondensator 11 als K-Wärmetauscher 13 ausgebildet ist. Durch den K-Wärmetauscher 13 strömt das Kältemittel des Kältekreises 7 und die Flüssigkeit des K-Fluidkreislaufes 4. Damit kann an dem K-Wärmetauscher 13 Wärme von dem Kältemittel des Kältekreises 7 auf die Flüssigkeit des K-Fluidkreislaufes 4 übertragen werden, d.h. am K-Wärmetauscher 13 wird das Fluid des K-Fluidkreislaufes 4 erwärmt. Die Flüssigkeit des K-Fluidkreislaufes 4 wird mittels der K-Umwälzpumpe 15 umgewälzt.

Der V-Fluidkreislauf 3 und der K-Fluidkreislauf 4 sind hydraulisch mit einer Ventileinheit 17 gekoppelt. Die Ventileinheit 17 ist zweiteilig. Durch die in Fig. 1 oben dargestellte obere Ventileinheit 17a wird die Flüssigkeit des V-Fluidkreislaufes 3 und des K-Fluidkreislaufes 4 durch die Leitung 5, 6 des V-und K-Fluidkreislaufes 3, 4 eingeleitet. Aus der in Fig. 1 unten dargestellten unteren Ventileinheit 17b strömt die Flüssigkeit des V-Fluidkreislaufes 3 und des K-Fluidkreislaufes 4 wieder aus der Ventileinheit 17b aus in die Leitung 5 des V-Fluidkreislaufes 3 und in die Leitung 6 des K-Fluidkreislaufes 4.

Die Ventileinheit 17a ist dabei durch Leitungen 28 der Thermokomponenten 2 mit der Ventileinheit 17b hydraulisch verbunden bzw. gekoppelt. Die Thermokomponenten 2 des Kraftfahrzeuges 25 sind dabei eine Batterie 18 zum Antrieben des Kraftfahrzeuges 25, eine Steuerungseinheit 19, z.B. eine Leistungselektronik, zur Steuerung des Kraftfahrzeuges 25, insbesondere der Temperierungseinrichtung 1, ein Elektromotor 20 zum Antrieb des Kraftfahrzeuges 25, wobei der Elektromotor 20 von der Batterie 18 mit elektrischem Strom versorgt wird, ein Verbrennungsmotor 21 zum Antreiben des Kraftfahrzeuges 25 als Hybridfahrzeug 26, einen Fahrzeuginnenraum 22, eine Umgebungsluft 23 des Kraftfahrzeuges und einen Thermospeicher 24. Der Thermospeicher 24 ist beispielsweise ein Flüssigkeitsspeicher mit einem Wasserinhalt von ungefähr 2 bis 3 Litern, der von eine sehr guten Isolierung, z.B. einer Vakuumisolierung, umgeben ist. Dabei werden im Allgemeinen die Thermokomponenten 2 des Hybridfahrzeuges 26 nicht unmittelbar von dem Fluid des V-Fluidkreislaufes 3 oder dem K-Fluidkreislauf 4 umströmt, sondern den jeweiligen Thermokomponenten 2 ist ein nicht dargestellter Wärmetauscher zugeordnet. Unter den in Fig. 1 dargestellten Thermokomponenten 2 mit den Bezugszeichen 18 bis 24 kann somit auch ein entsprechender Wärmetauscher verstanden werden, der diesen Thermokomponenten 2 mit dem Bezugszeichen 18 bis 24 zugeordnet ist. Die Batterie 18 als Traktionsbatterie umfasst einen Wärmetauscher. Zum Temperieren, d.h. zum Kühlen oder Erwärmen der Batterie 18 wird dabei Luft durch den der Batterie 18 zugeordneten Wärmetauscher (nicht dargestellt) durchgeleitet und mittels dieser Luft die Batterie 18 gekühlt oder erwärmt. Die Batterie 18 wird somit von dieser Luft umströmt. In analoger Weise wird auch der Fahrzeuginnenraum 22 des Kraftfahrzeuges 25 gekühlt oder erwärmt, indem durch einem dem Fahrzeuginnenraum 22 zugeordneten Wärmetauscher (nicht dargestellt) die Flüssigkeit des V-Fluidkreislaufes 3 oder des K-Fluidkreislaufes 4 durchgeleitet wird und mittels eines nicht dargestellten Gebläses wird durch diesen Wärmetauscher, der dem Fahrzeuginnenraum 22 zugeordnet ist, Luft durch diesen Wärmetauscher umgewälzt und damit der Fahrzeuginnenraum 22 bzw. der Wärmetauscher 22 des Fahrzeuginnenraumes 22 erwärmt oder gekühlt. Dies gilt in analoger Weise auch für die anderen Thermokomponenten 2.

Aus den in Fig. 1 dargestellten sieben Thermokomponenten 2 des Hybridfahrzeuges 26 kann eine zu kühlende Thermokomponente ausgewählt werden. Dies ist beliebig möglich, weil mittels der Ventileinheit 17 nur zu derjenigen Thermokomponente 2 oder denjenigen Thermokomponenten 2 die Flüssigkeit des V-Fluidkreislaufes 3 geleitet wird, welche zu kühlen ist oder sind. Soll beispielsweise lediglich die Batterie 18 des Hybridfahrzeuges 26 gekühlt werden, wird die Ventileinheit 17 mittels nicht dargestellter Ventile der Ventileinheit 17 der V-Fluidkreislauf 3 dahingehend gesteuert, dass die Flüssigkeit des V-Fluidkreislaufes 3 durch die Leitung 5 in der oberen Ventileinheit 17a ausschließlich durch die Batterie 18 bzw. den Wärmetauscher der Batterie 18 durchströmt. Sämtlich anderen Thermokomponenten 2, d.h. die Thermokomponenten 2 mit den Bezugszeichen 19 bis 24, werden nicht von der Flüssigkeit des V-Fluidkreislaufes 3 durchströmt. Nach dem Durchströmen der Flüssigkeit des V-Fluidkreislaufes 3 durch die Batterie 18 strömt diese Flüssigkeit wieder zu der Leitung 5 des V-Fluidkreislaufes 3 und somit wieder zurück zu dem V-Wärmetauscher 12. Der V-Fluidkreislauf 3 ist somit thermisch mit der Batterie 18 und mit dem V-Wärmetauscher 12 gekoppelt. Damit kann mittels dem V-Wärmetauscher 12 des Kältekreise 7 ausschließlich die Batterie 18 gekühlt werden. In analoger Weise zu dem V-Fluidkreislauf kann auch beim K-Fluidkreislauf 4 aus den vorhandenen Thermokomponenten 2 wenigstens eine beliebige Thermokomponente 2 ausgewählt und erwärmt werden. Soll beispielsweise der Fahrzeuginnenraum 22 erwärmt werden, wird die Flüssigkeit des K-Fluidkreislaufes 4 mittels der Ventileinheit 17 ausschließlich zu dem Fahrzeuginnenraum 22 geleitet. Die Flüssigkeit des K-Fluidkreislaufes 4 strömt somit nur durch die Leitungen 6 des K-Fluidkreislaufes 4, den K-Wärmetauscher 13 und den Wärmetauscher, der dem Fahrzeuginnenraum 22 zugeordnet ist sowie durch die Leitungen 28 zur Verbindung der Thermokomponenten 2 mit der oberen und unteren Ventileinheit 17a und 17b. Der K-Fluidkreislauf 4 ist somit thermisch mit dem K-Wärmetauscher 13 und nur dem Fahrzeuginnenraum 22 gekoppelt. Beim Umwälzen der Flüssigkeit des K-Fluidkreislaufes 4 mittels der K-Umwälzpumpe 15 kann somit ausschließlich der Fahrzeuginnenraum 22 mittels des Kondensators 11 des Kältekreise 7 erwärmt werden. Soll neben dem Fahrzeuginnenraum 22 eine weitere Thermokomponente 2 der Temperierungseinrichtung 1 erwärmt werden, z.B. der Thermospeicher 24, brauchen lediglich an der Ventileinheit 17 die entsprechenden Ventile geöffnet werden, so dass die Flüssigkeit des K-Fluidkreislaufes 4 auch durch den Thermospeicher 24 strömt.

Aus den vorhandenen Thermokomponenten 2 der Temperierungseinrichtung 1 können somit eine oder mehrere Thermokomponenten 2 ausgewählt werden und gekühlt und eine oder mehrere Thermokomponenten 2 beliebig ausgewählt und erwärmt werden mittels des Kältekreises 7. Die Temperierungseinrichtung 1 ist damit ein sehr flexibles System, weil aus den vorhandenen Thermokomponenten 2 beliebige Kombinationen von wenigstens einer zu kühlenden und wenigstens einer zu erwärmenden Thermokomponente 2 zusammengestellt werden können. Damit kann mittels einer nicht dargestellten Steuerungseinheit und mittels nicht dargestellter Sensoren der Energieverbrauch der Temperierungseinrichtung 1 zum Temperieren der Thermokomponenten 2 optimiert werden. Beispielsweise die Batterie 18 zum Antreiben des Hybridfahrzeuges 26 ist während des Betriebes auf eine Temperatur im Bereich zwischen 10 und 40°C zu halten. Dabei kann die Batterie 18 von der Temperierungseinrichtung 1 sowohl gekühlt oder erwärmt werden, je nach dem ob die Flüssigkeit des V-Fluidkreislaufes 3 oder des K-Fluidkreislaufes 4 die Batterie 18 bzw. den Wärmetauscher 18, der der Batterie 18 zugeordnet ist, durchströmt wird. Der Kältekreis 7 arbeitet dabei auch als Wärmepumpe, so dass aufgrund der hohen Leistungszahl der Wärmepumpe, z.B. im Bereich von 3, die dreifache Wärmeenergie zur Verfügung steht, welche an mechanischer Energie zum Betreiben des Verdichters 8 erforderlich ist. Der Verdichter 8 wird dabei entweder von einem gesonderten Elektromotor (nicht dargestellt) nur zum Antrieb des Verdichters 8 angetrieben oder von dem Verbrennungsmotor 21. Dabei kann zum Erwärmen von Thermokomponenten 2 des Kraftfahrzeuges 25 auch die Umgebungsluft 23 des Kraftfahrzeuges 25 genutzt werden, indem die Umgebungsluft 23 bzw. der Wärmetauscher 23, der der Umgebungsluft 23 zugeordnet ist, thermisch mittels der Ventileinheit 17 mit dem Verdampfer 10 des Kältekreises 7 gekoppelt wird.

Ist die Temperatur wenigstens einer zu kühlenden Thermokomponente 2 größer als die Temperatur wenigstens einer zu erwärmenden Thermokomponente 2, kann die Wärme von der zu kühlenden Thermokomponente 2 ohne Zwischenschaltung des Kältekreises 7 auf die wenigstens eine zu erwärmende Thermokomponente 2 unmittelbar durch die Flüssigkeit des V-Fluidkreislaufes 3 und des K-Fluidkreislaufes 4 übertragen werden. Hierzu ist die Temperierungseinrichtung 1 mit vier 3-Wegeventilen 16 versehen. Die 3-Wegeventile 16 werden dabei dahingehend geschalten, dass der V-Fluidkreislauf 3 und der K-Fluidkreislauf 4 hydraulisch unmittelbar gekoppelt sind unter Ausschaltung des V-Wärmetauschers 12 und des K-Wärmetauschers 13. Die 3-Wegeventile 16 sind dabei mit zwei By-Pass-Leitungen 29 verbunden. Beträgt beispielsweise die Temperatur des Verbrennungsmotors 21 70°C und die Temperatur der Batterie 180°C, kann mittels der Wärme des Verbrennungsmotors 21 als zu kühlende Thermokomponente 2 die Batterie 18 als zu erwärmende Thermokomponente unmittelbar ohne Verwendung des Kältekreises 7 erwärmt werden. Hierzu ergibt sich folgender Strömungsweg. Die von der K-Umwälzpumpe 15 umgewälzte Flüssigkeit des K-Fluidkreislaufes 4 strömt durch die Leitung 6 in die obere Ventileinheit 17a ein und anschließend ausschließend durch den Verbrennungsmotor 21, in dem durch die Ventileinheit 17a die an die Ventileinheit 17a angeschlossenen Leitung 28 für die Thermokomponenten 2 mit Ausnahme der Leitung 28 für den Verbrennungsmotor 21 alle geschlossen sind. Die Flüssigkeit des K-Fluidkreislaufes 4 kann somit an dem Verbrennungsmotor 21 Wärme aufnehmen und wird erwärmt und strömt anschließend durch die Leitung 6 des K-Fluidkreislaufes 4 zu dem 3-Wegeventil 16a. Das 3-Wegeventil 16a ist dabei in diesem Modus dahingehend geschaltet, dass die Flüssigkeit ausschließlich in die By-Pass-Leitung 29 einströmt und anschließend von der By-Pass-Leitung 29 zu dem 3-Wegeventil 16b. Das 3-Wegeventil 16b ist dabei dahingehend geschaltet, dass die Flüssigkeit ausschließlich in die Ventileinheit 17a einströmt. Die Ventileinheit 17 ist dabei dahingehend geschaltet, dass das durch das 3-Wegeventil 16b eingeleitete Flüssigkeit als Bestandteil des V-Fluidkreislaufes ausschließlich durch die Batterie 18 strömt. Damit wird von der Flüssigkeit des V-Fluidkreislaufes die Batterie 18 erwärmt und strömt anschließend durch die Leitung 5 zurück zu dem 3-Wegeventil 16c. Das 3-Wegeventil 16c ist dahingehend geschaltet, dass die in das 3-Wegeventil 16c einströmende Flüssigkeit ausschließlich in die By-Pass-Leitung 29 einströmt zu dem 3-Wegeventil 16d. Aus dem 3-Wegeventil 16d strömt die Flüssigkeit anschließend ausschließlich zu der K-Umwälzpumpe 15 und wiederholt somit den eben beschriebenen Kreislauf. Auch in diesem Betriebsmodus ohne Verwendung des Kältekreises 7 kann als zu kühlende Thermokomponente 2 oder als zu erwärmende Thermokomponente 2 jede beliebige Thermokomponente 2 der Temperierungseinrichtung 1 ausgewählt werden.

In einem weiteren nicht dargestellten Ausführungsbeispiel weist die Temperierungseinrichtung 1 keine 3-Wegeventile 16 und keine By-Pass-Leitung 29 auf. Zum Temperieren der Thermokomponenten 2 kann somit ausschließlich nur der Kältekreis 7 verwendet werden.

Insgesamt betrachtet sind mit der erfindungsgemäßen Temperierungseinrichtung 1 wesentliche Vorteile verbunden. Aus den vorhandenen Thermokomponenten 2 eines Kraftfahrzeuges 25 bzw. der Temperierungseinrichtung 1 kann beliebig wenigstens eine zu erwärmende Thermokomponente 2 und wenigstens eine zu kühlende Thermokomponente 2 ausgewählt werden. Das Temperieren der Thermokomponenten 2, insbesondere der Batterie 18, kann damit Energie optimiert mit einem sehr geringen Energieverbrauch durchgeführt werden, weil auf unterschiedliche Thermokomponenten 2 zurückgegriffen werden kann zum Kühlen oder Erwärmen und die Auswahl dahingehend erfolgen kann, dass der Energieverbrauch der Temperierungseinrichtung 1 minimal ist.

## Patentansprüche

1. Temperierungseinrichtung (1) für wenigstens eine Thermokomponente (2) eines Kraftfahrzeug (25), insbesondere ein Elektro- oder Hybridfahrzeug (26, 27), umfassend
- einen V-Fluidkreislauf (3) und einen K-Fluidkreislauf (4),
- einen Kältekreis (7) mit einem Verdampfer (10), einem Kondensator (11) und einem Verdichter (8), wobei
- der V-Fluidkreislauf (3) mit dem Verdampfer (10) thermisch gekoppelt ist zum Kühlen der wenigstens einer Thermokomponente (2) des Kraftfahrzeuges (25) mittels des V-Fluidkreislaufes (3),
- der K-Fluidkreislauf (4) mit dem Kondensator (11) thermisch gekoppelt ist zum Erwärmen der wenigstens einen Thermokomponente (2) des Kraftfahrzeuges (25) mittels des K-Fluidkreislaufes (4),
**dadurch gekennzeichnet, dass**
mittels einer Ventileinheit (17, 17a, 17b) auswählbar die wenigstens eine Thermokomponente (2) des Kraftfahrzeuges (25) mit dem V-Fluidkreislauf (3) thermisch koppelbar ist und mittels der Ventileinheit (17, 17a, 17b) auswählbar die wenigstens eine Thermokomponente (2) des Kraftfahrzeuges (25) mit dem K-Fluidkreislauf (4) thermisch koppelbar ist und der V-Fluidkreislauf (3) und der K-Fluidkreislauf (4) hydraulisch mit der Ventileinheit (17, 17a, 17b) gekoppelt sind.

2. Temperierungseinrichtung nach Anspruch 1,
**dadurch gekennzeichnet, dass**
die wenigstens eine Thermokomponente (2) eine Batterie (18), eine Steuerungseinheit (19), wenigstens ein Elektromotor (20), ein Verbrennungsmotor (21), ein Fahrzeuginnenraum (22) und/oder die Umgebungsluft (23) des Kraftfahrzeuges (25) ist.

3. Temperierungseinrichtung nach Anspruch 1 oder 2,
**dadurch gekennzeichnet, dass**
der K-Fluidkreislauf (4) mittels eines K-Wärmetauschers (13) mit dem Kondensator (11) thermisch gekoppelt ist und/oder der V-Fluidkreislauf (3) mittels eines V-Wärmetauschers (12) mit dem Verdampfer (10) thermisch gekoppelt ist und/oder der K-Fluidkreislauf (4) ein Flüssigkeitskreislauf (4) mit einer K-Umwälzpumpe (15) ist und/oder der V-Fluidkreislauf (3) ein Flüssigkeitskreislauf (3) mit einer V-Umwälzpumpe (14) ist

4. Temperierungseinrichtung nach einem oder mehreren der vorhergehenden Ansprüche,
**dadurch gekennzeichnet, dass**
der K-Fluidkreislauf (4) unmittelbar mit dem V-Fluidkreislauf (3) ohne Zwischenschaltung des Kältekreises (7) thermisch koppelbar ist, so dass mittels der Wärme wenigstens einer zu kühlenden Thermokomponente (2) wenigstens eine zu erwärmende Thermokomponente (2) erwärmbar ist.

5. Temperierungseinrichtung nach einem oder mehreren der vorhergehenden Ansprüche,
**dadurch gekennzeichnet, dass**
die Temperierungseinrichtung (1) einen Thermospeicher (24) zum Speichern von Wärme- oder Kälteenergie umfasst.

6. Temperierungseinrichtung nach Anspruch 5,
**dadurch gekennzeichnet, dass**
der Thermospeicher (24) mit dem K- oder V-Fluidkreislauf (3, 4) thermisch koppelbar ist, insbesondere als Thermokomponente (2).

7. Verfahren zum Temperieren wenigstens einer Thermokomponente (2) eines Kraftfahrzeuges (25), insbesondere eines Elektro- oder Hybridfahrzeuges (26, 27), mit den Schritten:
- Kühlen wenigstens einer zu kühlenden Thermokomponente (2),
- Erwärmen wenigstens einer zu erwärmenden Thermokomponente (2), indem
- Wärme von der wenigstens einen zu kühlenden Thermokomponente (2) auf die wenigstens eine zu erwärmende Thermokomponente (2) übertragen wird,
- aus verschiedenen Thermokomponenten (2) wenigstens eine zu kühlende Thermokomponente (2) ausgewählt und gekühlt wird,
- aus verschiedenen Thermokomponenten (2) wenigstens eine zu erwärmende Thermokomponente (2) ausgewählt und erwärmt wird,
**dadurch gekennzeichnet, dass**
die wenigstens eine zu erwärmende Thermokomponente (2) ausgewählt wird, indem die wenigstens eine Thermokomponente (2) mittels einer Ventileinheit (17, 17a, 17b) thermisch mit einem K-Fluidkreislauf (4) gekoppelt wird und die wenigstens eine zu kühlende Thermokomponente (2) ausgewählt wird, indem die wenigstens eine Thermokomponente (2) mittels der Ventileinheit (17, 17a, 17b) thermisch mit einem V-Fluidkreislauf (3) gekoppelt wird und der V-Fluidkreislauf (3) und der K-Fluidkreislauf (4) hydraulisch mit der Ventileinheit (17, 17a, 17b) gekoppelt sind.

8. Verfahren nach Anspruch 7,
**dadurch gekennzeichnet, dass**
der K-Fluidkreislauf (4) mit einem Kondensator (11) eines Kältekreises (7) thermisch gekoppelt ist und/oder der V-Fluidkreislauf (3) thermisch mit einem Verdampfer (10) des Kältekreises (7) gekoppelt ist.

9. Verfahren nach Anspruch 7 oder 8,
**dadurch gekennzeichnet, dass**
die Wärme von der wenigstens einen zu kühlenden Thermokomponente (2) auf die wenigstens eine zu erwärmende Thermokomponente (2) ohne den Kältekreis (7) durch einen Fluidkreislauf (3, 4), insbesondere einen zusammengeschalteten V- und K-Fluidkreislauf (3, 4), übertragen wird.

10. Verfahren nach einem oder mehreren der Ansprüche 7 bis 9,
**dadurch gekennzeichnet, dass**
die wenigstens eine Thermokomponente (2) eine Batterie (18), eine Steuerungseinheit (19), wenigstens ein Elektromotor (20), ein Verbrennungsmotor (21), ein Fahrzeuginnenraum (22), ein Thermospeicher (24) und/oder die Umgebungsluft (23) des Kraftfahrzeuges (25) ist.

11. Verfahren nach einem oder mehreren der Ansprüche 7 bis 10,
**dadurch gekennzeichnet, dass**
die Wärme von der wenigstens einen zu kühlenden Thermokomponente (2) auf die wenigstens eine zu erwärmende Thermokomponente (2) mittels Wärmekonvektion, insbesondere mittels wenigstens eines Fluidkreislaufes (3, 4), übertragen wird.

## Claims

1. Temperature control device (1) for at least one thermal component (2) of a motor vehicle (25), in particular an electric or hybrid vehicle (26, 27), comprising
- a V-fluid circuit (3) and a K-fluid circuit (4),
- a cold circuit (7) with an evaporator (10), with a condenser (11) and with a compressor (8),
- the V-fluid circuit (3) being thermally coupled to the evaporator (10) in order to cool the at least one thermal component (2) of the motor vehicle (25) by means of the V-fluid circuit (3),
- the K-fluid circuit (4) being thermally coupled to the condenser (11) in order to heat the at least one thermal component (2) of the motor vehicle (25) by means of the K-fluid circuit (4),
**characterized in that**,
selectably by means of a valve unit (17, 17a, 17b), the at least one thermal component (2) of the motor vehicle (25) can be thermally coupled to the V-fluid circuit (3), and, selectably by means of the valve unit (17, 17a, 17b), the at least one thermal component (2) of the motor vehicle (25) can be thermally coupled to the K-fluid circuit (4), and the V-fluid circuit (3) and K-fluid circuit (4) are hydraulically coupled to the valve unit (17, 17a, 17b).

2. Temperature control device according to Claim 1, **characterized in that** the at least one thermal component (2) is a battery (18), a control unit (19), at least one electric motor (20), an internal combustion engine (21), a vehicle interior (22) and/or the ambient air (23) of the motor vehicle (25).

3. Temperature control device according to Claim 1 or 2, **characterized in that** the K-fluid circuit (4) is thermally coupled to the condenser (11) by means of a K-heat exchanger (13), and/or the V-fluid circuit (3) is thermally coupled to the evaporator (10) by means of a V-heat exchanger (12), and/or the K-fluid circuit (4) is a liquid circuit (4) with a K-circulation pump (15), and/or the V-fluid circuit (3) is a liquid circuit (3) with a V-circulation pump (14).

4. Temperature control device according to one or more of the preceding claims, **characterized in that** the K-fluid circuit (4) can be thermally coupled directly to the V-fluid circuit (3), without the cold circuit (7) being interposed, so that at least one thermal component (2) to be heated can be heated by means of the heat of at least one thermal component (2) to be cooled.

5. Temperature control device according to one or more of the preceding claims, **characterized in that** the temperature control device (1) comprises a thermal accumulator (24) for the storage of heat energy or cold energy.

6. Temperature control device according to Claim 5, **characterized in that** the thermal accumulator (24) can be thermally coupled, in particular as a thermal component (2), to the K- or V-fluid circuit (3, 4).

7. Method for the temperature control of at least one thermal component (2) of a motor vehicle (25), in particular an electric or hybrid vehicle (26, 27), having the steps:
- cooling of at least one thermal component (2) to be cooled,
- heating of at least one thermal component (2) to be heated, in that
- heat from the at least one thermal component (2) to be cooled is transmitted to the at least one thermal component (2) to be heated,
- at least one thermal component (2) to be cooled is selected from various thermal components (2) and is cooled,
- at least one thermal component (2) to be heated is selected from various thermal components (2) and is heated,
**characterized in that**
the at least one thermal component (2) to be heated is selected, **in that** the at least one thermal component (2) is thermally coupled to a K-fluid circuit (4) by means of a valve unit (17, 17a, 17b), and the at least one thermal component (2) to be cooled is selected, **in that** the at least one thermal component (2) is thermally coupled to a V-fluid circuit (3) by means of the valve unit (17, 17a, 17b), and the V-fluid circuit (3) and K-fluid circuit (4) are hydraulically coupled to the valve unit (17, 17a, 17b).

8. Method according to Claim 7, **characterized in that** the K-fluid circuit (4) is thermally coupled to a condenser (11) of a cold circuit (7), and/or the V-fluid circuit (3) is thermally coupled to an evaporator (10) of the cold circuit (7).

9. Method according to Claim 7 or 8, **characterized in that** the heat from the at least one thermal component (2) to be cooled is transmitted to the at least one thermal component (2) to be heated, without the cold circuit (7), by means of a fluid circuit (3, 4), in particular an interconnected V- and K-fluid circuit (3, 4).

10. Method according to one or more of Claims 7 to 9, **characterized in that** the at least one thermal component (2) is a battery (18), a control unit (19), at least one electric motor (20), an internal combustion engine (21), a vehicle interior (22), a thermal accumulator (24) and/or the ambient air (23) of the motor vehicle (25).

11. Method according to one or more of Claims 7 to 10, **characterized in that** the heat from the at least one thermal component (2) to be cooled is transmitted to the at least one thermal component (2) to be heated by means of heat convection, in particular by means of at least one fluid circuit (3, 4).

## Revendications

1. Dispositif (1) de contrôle de la température d'au moins un composant thermique (2) d'un véhicule automobile (25), en particulier d'un véhicule électrique ou d'un véhicule hybride (26, 27), le dispositif comportant :
un circuit V (3) de fluide et un circuit K (4) de fluide,
un circuit de refroidissement (7) doté d'un évaporateur (10), d'un condenseur (11) et d'un compresseur (8),
le circuit V (3) de fluide étant couplé thermiquement à l'évaporateur (10) pour refroidir le ou les composants thermiques (2) du véhicule automobile (25) au moyen du circuit V (3) de fluide,
le circuit K (4) de fluide étant couplé thermiquement au condenseur (11) pour chauffer le ou les composants thermiques (2) du véhicule automobile (25) au moyen du circuit K (4) de fluide,
**caractérisé en ce que**
le ou les composants thermiques (2) du véhicule automobile (25) peuvent être couplés thermiquement de manière sélective au circuit V (3) de fluide au moyen d'une unité de soupapes (17, 17a, 17b) et le ou les composants thermiques (2) du véhicule automobile (25) peuvent être couplés thermiquement de manière sélective au circuit K (4) de fluide au moyen de l'unité de soupapes (17, 17a, 17b) et
**en ce que** circuit V (3) de fluide et le circuit K (4) de fluide sont couplés hydrauliquement à l'unité de soupapes (17, 17a, 17b).

2. Dispositif de contrôle de température selon la revendication 1, **caractérisé en ce que** le ou les composants thermiques (2) sont une batterie (18), une unité de commande (19), au moins un moteur électrique (20), un moteur à combustion interne (21), l'habitacle (22) du véhicule et/ou l'air (23) présent à l'intérieur du véhicule automobile (25).

3. Dispositif de contrôle de température selon les revendications 1 ou 2, **caractérisé en ce que** le circuit K (4) de fluide est couplé thermiquement au condenseur (11) au moyen d'un échangeur de chaleur K (13), **en ce que** le circuit V (3) de fluide est couplé thermiquement à l'évaporateur (10) au moyen d'un échangeur de chaleur V (12), **en ce que** le circuit K (4) de fluide est un circuit (4) de liquide doté d'une pompe de circulation K (15) et/ou **en ce que** le circuit V (3) de fluide est un circuit (3) de liquide doté d'une pompe de circulation V (14).

4. Dispositif de contrôle de température selon l'une ou plusieurs des revendications précédentes, **caractérisé en ce que** le circuit K (4) de fluide peut être couplé thermiquement au circuit V (3) de fluide de manière directe et sans passer par l'intermédiaire du circuit de refroidissement (7) de telle sorte qu'au moins un thermocomposant (2) à chauffer puisse être chauffé au moyen de la chaleur d'au moins un composant thermique (2) à refroidir.

5. Dispositif de contrôle de température selon l'une ou plusieurs des revendications précédentes, **caractérisé en ce que** le dispositif (1) de contrôle de température comporte un accumulateur de chaleur (24) qui accumule de l'énergie thermique ou de l'énergie frigorifique.

6. Dispositif de contrôle de température selon la revendication 5, **caractérisé en ce que** l'accumulateur de chaleur (24) peut être couplé thermiquement au circuit K ou au circuit V (3, 4) de fluide, en particulier en tant que composant thermique (2).

7. Procédé de contrôle de la température d'au moins un composant thermique (2) d'un véhicule automobile (25), en particulier d'un véhicule électrique ou d'un véhicule hybride (26, 27), le procédé comportant les étapes qui consistent à :
refroidir au moins un composant thermique (2) à refroidir,
chauffer au moins un composant thermique (2) à chauffer,
en transférant de la chaleur du ou des composants thermiques (2) à refroidir vers le ou les composants thermiques (2) à chauffer,
sélectionner et refroidir au moins un composant thermique (2) à refroidir parmi différents composants thermiques (2),
sélectionner et chauffer au moins un composant thermique (2) parmi différents composants thermiques (2),
**caractérisé en ce que**
le ou les composants thermiques (2) à chauffer sont sélectionnés en couplant thermiquement le ou les composants thermiques (2) à un circuit K (4) de fluide au moyen d'une unité de soupapes (17, 17a, 17b),
**en ce que** le ou les composants thermiques (2) à refroidir sont sélectionnés en couplant thermiquement à un circuit V (3) de fluide le ou les composants thermiques (2) au moyen de l'unité de soupapes (17, 17a, 17b) et
**en ce que** le circuit V (3) de fluide et le circuit K (4) de fluide sont couplés hydrauliquement à l'unité de soupapes (17, 17a, 17b).

8. Procédé selon la revendication 7, **caractérisé en ce que** le circuit K (4) de fluide est couplé thermiquement à un condenseur (11) d'un circuit de refroidissement (7) et/ou **en ce que** le circuit V (3) de fluide est couplé thermiquement à un évaporateur (10) du circuit de refroidissement (7).

9. Procédé selon les revendications 7 ou 8, **caractérisé en ce que** la chaleur du ou des composants thermiques (2) à refroidir est transférée vers le ou les composants thermiques (2) à chauffer, sans faire intervenir le circuit de refroidissement (7), par un circuit de fluide (3, 4), en particulier un circuit V et un circuit K de fluide (3, 4) raccordés l'un à l'autre.

10. Procédé selon l'une ou plusieurs des revendications 7 à 9, **caractérisé en ce que** le ou les composants thermiques (2) sont une batterie (18), une unité de commande (19), au moins un moteur électrique (20), un moteur à combustion interne (21), l'habitacle (22) du véhicule, un accumulateur de chaleur et/ou l'air (23) présent à l'intérieur du véhicule automobile (25).

11. Procédé selon l'une ou plusieurs des revendications 7 à 10, **caractérisé en ce que** la chaleur du ou des composants thermiques (2) à refroidir est transférée vers le ou les composants thermiques (2) par convection thermique, en particulier au moyen d'au moins un circuit (3, 4) de fluide.
